# EUROPEAN PATENT APPLICATION

(11) **EP 4 458 593 A1**
(43) Date of publication of application: **06.11.2024**
(21) Application number: 24171732.1
(22) Date of filing: 22.04.2024
(51) Int. Cl.: B60H 1/00, B60H 1/14

(54) **THERMAL MANAGEMENT SYSTEMS AND METHODS FOR RECREATIONAL VEHICLES**

(30) Priority: 01.05.2023 US 202318310250
(71) Applicant: Brunswick Corporation, Mettawa, IL 60045 (US)
(72) Inventor: EADIE, Philip, Donaghadee, BT21 0NW (GB); BLACK, Stuart C, Ballyclare, BT39 0TR (GB)
(74) Representative: Gill Jennings & Every LLP

(57) **Abstract**

A recreational vehicle (10) includes a first heat source (31), a second heat source (51), a first heat sink (54), and a second heat sink (55). At least one heat transfer loop (30, 50) is configured to transfer thermal energy from the first heat source (31) to at least one of the first and second heat sinks (54, 55) and is further configured to transfer thermal energy from the second heat source (51) to at least one of the first and second heat sinks (54, 55).

## Description

### FIELD

The present disclosure relates to recreational vehicles, and specifically recreational vehicles with thermal management systems and methods.

### BACKGROUND

Recreational vehicles (RVs) are vehicles designed with lifestyle amenities to make travel enjoyable. RVs can include different features that increase travel convenience and reduce hassles associated with travel. For example, RVs can be equipped with kitchens, bathrooms, entertainment devices such as TVs and stereos, and living quarters (e.g., dining rooms, bedrooms). RVs, and the equipment incorporated therein, can consume substantial amounts of energy, and thus, the RVs include power generation systems such as internal combustion engines (which also propel the RV) and electric energy generators (such as alternators) to generate energy.

### SUMMARY

This Summary is provided to introduce a selection of concepts that are further described below in the Detailed Description. This Summary is not intended to identify key or essential features of the claimed subject matter, nor is it intended to be used as an aid in limiting the scope of the claimed subject matter.

In a first aspect of the invention, a recreational vehicle includes a first heat source, a second heat source, a first heat sink, and a second heat sink. At least one heat transfer loop is configured to transfer thermal energy from the first heat source to at least one of the first and second heat sinks and is further configured to transfer thermal energy from the second heat source to at least one of the first and second heat sinks.

Optionally, the at least one heat transfer loop includes a first heat transfer loop comprising the first heat source and a second heat transfer loop comprising the second heat source and the first and second heat sinks.

Optionally, a heat exchanger thermally couples the first heat transfer loop and the second heat transfer loop.

Optionally, a third heat transfer loop is configured for heat exchange with the first heat transfer loop. Optionally, the third heat transfer loop is a heat pump. Optionally, the first heat source comprises a battery.

Optionally, the first and second heat sources are selected from the group consisting of a battery, an electric motor, and an inverter.

Optionally, the first and second heat sinks are selected from the group consisting of a water heater, a space heater, an oven, a holding tank, a fireplace, and a clothes dryer.

Optionally, the at least one heat transfer loop is configured to transfer thermal energy from the first heat source to the at least one of the first and second heat sinks simultaneously while transferring thermal energy from the second heat source to the at least one of the first and second heat sinks.

Optionally, the at least one heat transfer loop is configured to recirculate cooled heat transfer medium from at least one of the first and second heat sinks to at least one of the first and second heat sources.

In a second aspect of the invention, a method for thermal management of a recreational vehicle includes forming at least one heat transfer loop configured to transfer thermal energy from a first heat source on the recreational vehicle to at least one of a first heat sink on the recreational vehicle and a second heat sink on the recreational vehicle and further configured to transfer thermal energy from a second heat source on the recreational vehicle to at least one of the first heat sink and the second heat sink.

Optionally, the method includes forming the at least one heat transfer loop such that the at least one heat transfer loop is configured to recirculate cooled heat transfer medium from at least one of the first heat sink and the second heat sink to at least one of the first heat source and the second heat source.

Optionally, forming the at least one heat transfer loop includes forming a first heat transfer loop comprising the first heat source and forming a second heat transfer loop comprising the second heat source and the first and second heat sinks.

Optionally, the method includes forming a third heat transfer loop configured for heat exchange with the first heat transfer loop.

Optionally, forming the third heat transfer loop comprises providing a heat pump in thermal communication with the first heat transfer loop.

Optionally, the method includes thermally coupling the first heat transfer loop and the second heat transfer loop by way of a heat exchanger.

In a third aspect of the invention, a thermal management system for a recreational vehicle includes a first heat transfer loop comprising a first heat source, a second heat transfer loop comprising a second heat source and a first heat sink, and a heat exchanger thermally coupling the first heat transfer loop and the second heat transfer loop. The first heat sink is configured to receive thermal energy from both the first and second heat sources via the first and second heat transfer loops.

Optionally, a third heat transfer loop is configured for heat exchange with the first heat transfer loop. Optionally, the third heat transfer loop is a heat pump.

Optionally, the second heat transfer loop further comprises a second heat sink and the second heat sink is configured to receive thermal energy from both the first and second heat sources via the first and second heat transfer loops.

Various other features, objects, and advantages will be made apparent from the following description taken together with the drawings.

### BRIEF DESCRIPTION OF THE DRAWINGS

The present disclosure is described with reference to the following Figures. The same numbers are used throughout the Figures to reference like features and like components.
Fig. 1 is a perspective view of an example recreational vehicle according to the present disclosure.
Fig. 2 is a schematic view of an example thermal management system according to the present disclosure.
Fig. 3 is a schematic view of another example thermal management system according to the present disclosure.
Fig. 4 is a schematic view of another example thermal management system according to the present disclosure.
Fig. 5 is a schematic view of an example control system according to the present disclosure.

### DETAILED DESCRIPTION

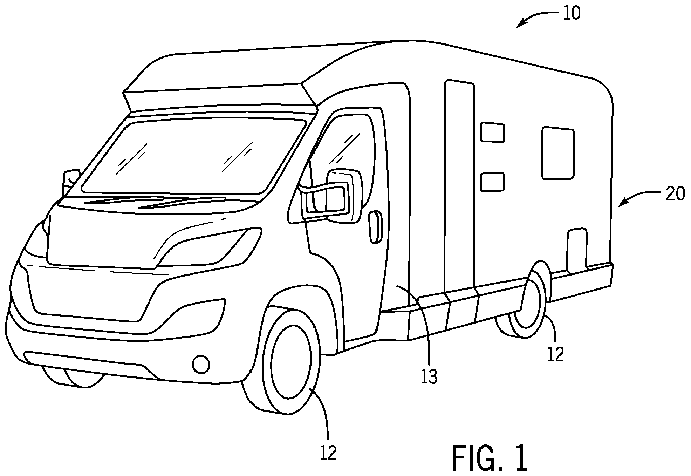

Referring to Fig. 1, an example recreational vehicle (RV) 10 according to the present disclosure is depicted. The RV 10 includes wheels 12 that engage the road and a body 13 in which the operator and/or riders reside. The RV 10 can include different features such as kitchens, bathrooms, entertainment devices, air-conditioning systems, and/or bedrooms. The type of RV 10 can vary, and the example RV 10 depicted in Fig. 1 is a motorhome. In other examples, the RV 10 is a caravan, van conversion, or campervan. The RV 10 can be driven by the operator to a destination, and before, during, or after being driven, the operator and/or other riders can utilize features of the RV 10 to perform lifestyle activities such as cooking and eating tasks, leisure activities, sleeping, and/or entertaining. The RV 10 is also equipped with occupant comfort systems including but not limited to lighting systems (e.g., interior lighting) and thermal systems (e.g., air-conditioning systems) that optimize the comfort of the operator and other riders in the RV 10. These systems may be powered by an internal combustion engine and/or electrical power sources (e.g., batteries), and the RV 10 is propelled by the internal combustion engine (ICE), electric motors, and/or other propulsion sources.

The present inventors of the present disclosure recognized that operators of RVs, due to personal, regulatory, and/or environmental concerns, may wish to own and/or operate RVs that are powered by 'green', alternative power systems such as hybrid (ICE/e-motor) propulsion systems and/or fully electric propulsion systems in lieu of conventional ICE propulsion systems that utilize only fossil fuels. The present inventors recognized that, to be efficiently and effectively utilized, electric propulsion systems in RVs should advantageously maximize thermal efficiency, minimize wasted heat in order to reduce the size of electric power sources (e.g., reduce battery size), minimize initial and operating costs, and/or maximize life of the power source(s) and electric devices (e.g., motors). Accordingly, through research and development, the present inventors developed the below-described example RVs and thermal management systems that advantageously increase efficiency and effectiveness of electric propulsion systems in RVs by utilizing heat from one or more heat sources (e.g., batteries, electric motors, inverter) in one or more heat sinks (e.g., living space heaters, water heaters, and/or cooking devices). The example RVs and thermal management systems described herein below can include additional heating sources (e.g., electric resistive heating devices) that are utilized in the event that the total heat energy required by one or more heat sinks is greater than heat output by the heat sources of the RV and/or one or more cooling systems in the event that the total heat energy in the system is greater than a maximum allowable heat or temperature limit for the operator/occupants and/or heat-sensitive components (e.g., batteries).

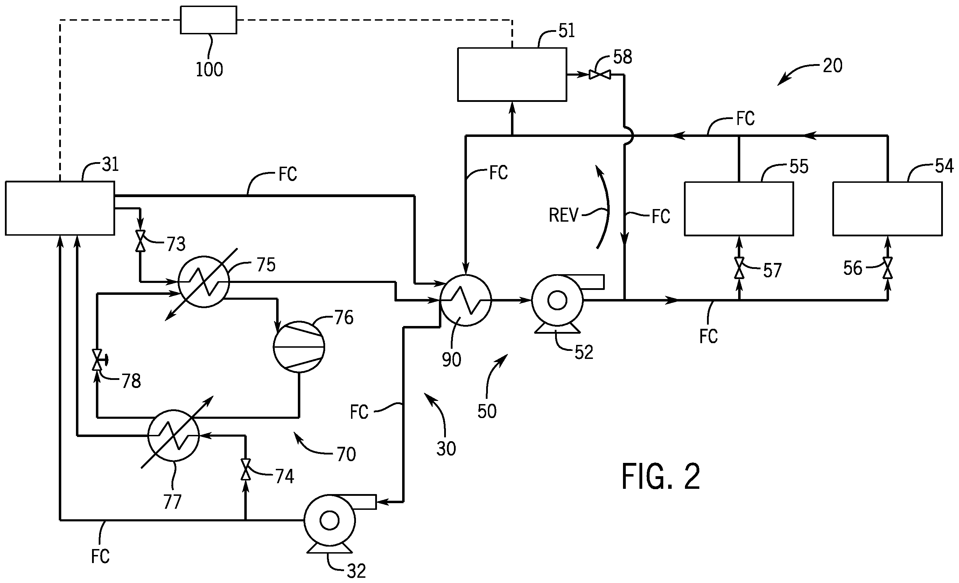

Referring now to Fig. 2, an example thermal management system 20 for an RV is depicted (see for example the RV 10 in Fig. 1). The system 20 is configured to manage heat generated by one more heat sources by transferring the heat to one or more heat sinks to thereby increase efficiency and effectiveness of the RV 10 and the components thereof. The RV 10 can include one or more heat sources 31, 51. The type of heat source 31, 51 can vary and can be, for example, a battery, an electric motor, or an inverter. In other examples, the heat source 31, 51 is a cooking appliance, a refrigeration appliance, or piping through which heated fluid is conveyed. Similarly, the RV 10 can include one or more heat sinks 54, 55. The type of heat sink 54, 55 can vary and can be, for example, a water heater, a space heater, an oven, a holding tank, a fireplace, or a clothes dryer. Specifically, the system 20 can be configured to transfer thermal energy from the heat source(s) 31, 51 to the heat sink(s) 54, 55 thereby utilizing thermal energy generated by the heat source(s) 31, 51 to operate the heat sink(s) 54, 55. Note that the present disclosure uses the terms 'thermal energy' and 'heat' interchangeably, which terms are intended to be synonymous. In one non-limiting example, as the first heat source 31 generates heat, such as a battery that discharges electrical power to a component of the RV 10 (e.g., the battery powers the electric motor that drives the wheels), the system 20 transfers the heat to a first heat sink 54 such as a water heater. As such, in this example, the heat from the first heat source 31 warms the water in the first heat sink 54 such that less or no additional energy (e.g., electrical energy that powers a resistive heating element in the water heater or thermal energy provided by a direct fire gas burner in the water heater) is necessary to properly operate the first heat sink 54. Note that in certain examples, an additional heat source may also be required if the total thermal energy required by the heat sink(s) 54, 55 is greater than total thermal energy generated by the heat sources 31, 51. Accordingly, the system 20 increases energy efficiency of the RV 10 while also effectively managing thermal energy to thereby increase thermal efficiency of heat sources and/or heat sinks; effectively transfers heat from heat sources to heat sinks thereby minimizing lost or wasted heat; reduces the size and weight of power sources; increases the life expectancy of heat sources, heat sinks, and/or other components of the RV 10; and/or minimizes initial and operating costs of the RV 10.

Example systems 20 of the present disclosure are described in greater detail below. Note that each of the example systems 20 described herein can include features and/or components that can be combined with other features and/or components of other example systems 20.

Still referring to Fig. 2, the example system 20 includes a first heat transfer loop 30 comprising a series of media or fluid conduits FC (e.g. pipes, tubes) through which a thermal transfer media, such as dielectric fluid, water, glycol, or a water-ethylene glycol mixture, flows to various components of the first heat transfer loop 30. The fluid conduits FC are coupled to each component in the first heat transfer loop 30 in a known manner appropriate for heat exchange, such as by being wrapped around or coiled next to a given component, being fluidically connected to a jacket in a housing of the given component, etc. As such, the thermal transfer media is capable of transferring heat from one component to another. Note that the fluid conduits FC are schematically depicted as solid lines in Fig. 2, and the flow direction of the thermal transfer media through the fluid conduits FC is depicted by the arrowheads at the ends of the solid lines. The first heat transfer loop 30 includes a pump 32 that pumps the thermal transfer media through the fluid conduits FC. The first heat transfer loop 30 is thermally coupled to the first heat source 31 (e.g., battery) that powers various components of the RV 10 (Fig. 1). For example, the first heat source 31 can be electrically coupled to an interior light system (not depicted), exterior lights (not depicted), and/or the second heat source 51 (e.g., electric motor that drives the wheels 12 of the RV 10). The first heat transfer loop 30 is coupled to a heat exchanger 90, and the heat exchanger 90 thermally couples the first heat transfer loop 30 to a second heat transfer loop 50 (described in greater detail herein below).

Generally, in one non-limiting example operation of the system 20, the pump 32 conveys relatively lower temperature thermal transfer media to the first heat source 31 such that the temperature of the thermal transfer media increases and the first heat source 31 is cooled. The relatively higher temperature thermal transfer media is further conveyed to the heat exchanger 90 which is configured to transfer the thermal energy in the thermal transfer media to thermal transfer media in the second heat transfer loop 50. As such, the thermal transfer media conveyed away from the heat exchanger 90 has a relatively lower temperature than the thermal transfer media upstream of the heat exchanger 90. In this way, the first heat source 31 is cooled and thermal energy in the first heat transfer loop 30 is transferred to the second heat transfer loop 50.

Optionally, the system 20 also includes a third heat transfer loop 70 that is thermally coupled to the first heat transfer loop 30 such that the third heat transfer loop 70 is configured for heat exchange with the first heat transfer loop 30. Note that the third heat transfer loop 70 may also be coupled to the heat exchanger 90. The third heat transfer loop 70 includes one or more valves 73, 74 that can be operated to permit the thermal transfer media of the first heat transfer loop 30 to be conveyed to the third heat transfer loop 70. The valves 73, 74 can also be operated to thermally isolate or decouple the third heat transfer loop 70 from the first heat transfer loop 30. In the example depicted in Fig. 2, the third heat transfer loop 70 is a heat pump and includes an evaporator 75, a compressor 76, a condenser 77, and an expansion valve 78 operable to thereby transfer heat to and from the thermal transfer media in the first heat transfer loop 30. The above-noted components of the third heat transfer loop 70 can be any suitable component known in the industry. In one non-limiting example, the third heat transfer loop 70 can include one or more features and/or components of a heat pump manufactured by DENSO (e.g., see https://www.denso.com/global/en/business/products-and-services/mobility/pick-up/hpacs/). Note that the third heat transfer loop 70 can be selectively activated when the transfer of thermal energy is needed as described herein. For instance, when the third heat transfer loop 70 is active, i.e. 'on', the thermal transfer media of the third heat transfer loop 70 is conveyed therethrough.

In one example operation of the first and third heat transfer loops 30, 70, the first valve 73 is opened such that relatively higher temperature thermal transfer media from the first heat source 31 flows through the first valve 73 to the evaporator 75. The evaporator 75 removes heat from the thermal transfer media by transferring thermal energy to separate thermal transfer media in the third heat transfer loop 70, thereby cooling the thermal transfer media in the first heat transfer loop 30. The thermal transfer media in the third heat transfer loop 70 is conveyed by a pump (not depicted) to the condenser 77 which transfers heat out of the third heat transfer loop 70 to the environment. As such, the third heat transfer loop 70 is capable of reducing the temperature of the thermal transfer media of the first heat transfer loop 30 that flows to the heat exchanger 90. This example operation may be initiated when the temperature of the thermal transfer media passing out of the first heat source 31 is greater than a threshold temperature and/or when the heat exchanger 90 does not require heated thermal transfer media. The third heat transfer loop 70 also advantageously prevents overheating of the first heat source 31 and/or the thermal transfer media conveyed to the heat exchanger 90. Note in certain examples relatively lower-temperature thermal transfer media can pass directly to the heat exchanger 90 from the evaporator 75. In other examples, a valve or T-fitting (not depicted) may permit the thermal transfer media in the first heat transfer loop 30 exiting the evaporator 75 to bypass the heat exchanger 90 and flow to the pump 32.

In another example operation of the first and third heat transfer loops 30, 70, the second valve 74 is opened such that relatively lower-temperature thermal transfer media from the heat exchanger 90 flows through the second valve 74 to the condenser 77. The third heat transfer loop 70, and specifically the condenser 77, heats the thermal transfer media of the first heat transfer loop 30, which is then conveyed to the first heat source 31. As such, the thermal transfer media heats the first heat source 31. This example operation may be initiated when the temperature of the first heat source 31 falls to or below a minimum temperature threshold. For instance, the first heat source 31 may be a battery that must maintain a minimum temperature in order to operate efficiently and avoid damaging cold.

In still other examples of operation, the third heat transfer loop 70 is not used to heat or cool the thermal transfer media in the first heat transfer loop 30, as will be apparent from several examples provided herein below.

As noted above, the thermal transfer media in the second heat transfer loop 50 is configured to receive thermal energy from the thermal transfer media in the first heat transfer loop 30 via the heat exchanger 90, which may be a conventional heat exchanger. The second heat transfer loop 50 includes a pump 52 that pumps the thermal transfer media through the fluid conduits FC. The second heat transfer loop 50 is thermally coupled to the second heat source 51 and the first and second heat sinks 54, 55 in a known manner appropriate for heat exchange, such as by the fluid conduits FC being wrapped around or coiled next to a given component, being fluidically connected to a jacket in a housing of the given component, etc. Note that the type of thermal transfer media in the second heat transfer loop 50 can be different than the type of thermal transfer media in the first heat transfer loop 30. In the example depicted in Fig. 2, the second heat source 51 is an electric motor that drives the wheels 12 of the RV 10, and the second heat source 51 generates heat when operated. The second heat transfer loop 50 is coupled to the heat exchanger 90, and as noted above, the heat exchanger 90 thermally couples the first heat transfer loop 30 and to the second heat transfer loop 50. The second heat transfer loop 50 further facilitates transfer of thermal energy to the heat sinks 54, 55 from the second heat source 51 and/or the first heat source 31 via the heat exchanger 90.

Generally, in one non-limiting example operation of the system 20, the pump 52 conveys relatively higher-temperature thermal transfer media to one or both of the heat sinks 54, 55, where heat is transferred to the components of or media within the heat sinks 54, 55. The second heat transfer loop 50 includes one or more valves 56, 57 that are selectively opened to permit conveyance of the thermal transfer media to the corresponding heat sink 54, 55. For instance, the first heat sink 54 may be a space heater that emits the heat in the interior space of the RV 10 and the second heat sink 55 may be a water heater that utilizes the heat to heat potable water therein. The thermal transfer media is conveyed away from the heat sinks 54, 55 with a lower temperature relative to the temperature of the thermal transfer media conveyed to the heat sinks 54, 55. Optionally, the second heat transfer loop 50 includes a valve 58 that can be opened to circulate the thermal transfer media to the second heat source 51 and then back to the heat sinks 54, 55. When the valve 58 is open, the relatively lower-temperature thermal transfer media is conveyed from the heat sinks 54, 55 to the second heat source 51, which heats the thermal transfer media, thereby cooling the second heat source 51. A portion of the relatively lower-temperature thermal transfer media from the heat sinks 54, 55 is also conveyed to the heat exchanger 90. The heat exchanger 90 may warm the thermal transfer media in the second heat transfer loop 50 if the thermal transfer media in the first heat transfer loop 30 is hotter than the thermal transfer media in the second heat transfer loop 50.

When the valve 58 is closed, the thermal transfer media bypasses the second heat source 51 and is conveyed to the heat exchanger 90. The heat exchanger 90 may warm the thermal transfer media in the second heat transfer loop 50 if the thermal transfer media in the first heat transfer loop 30 is hotter than the thermal transfer media in the second heat transfer loop 50. The relatively warmer thermal transfer fluid leaving the heat exchanger 90 can then be conveyed by the pump 52 to the heat sinks 54, 55 to further heat the contents and/or components of the heat sinks 54, 55.

Thus, the second heat transfer loop 50 is configured to recirculate the thermal transfer fluid from at least one of the first and second heat sinks 54, 55 to the second heat source 51 and/or to the heat exchanger 90. As such, the second heat transfer loop 50 is also configured to reutilize the heat generated by the second heat source 51 and/or the first heat source 31 to operate the heat sinks 54, 55, thereby increasing energy efficiency of the RV 10. In one specific example, the first and second heat transfer loops 30, 50 are configured to transfer thermal energy from the first heat source 31 to at least one of the first and second heat sinks 54, 55 simultaneously while also transferring thermal energy from the second heat source 51 to at least one of the first and second heat sinks 54, 55. This may be the case when the valve 58 is open and thermal transfer media in the second heat transfer loop 50 circulates through both the second heat source 51 (and is heated thereby) and through the heat exchanger 90, where it is warmed by by the hotter thermal transfer media in the first heat transfer loop 30.

In an example operation of the system 20, the heat generated by the second heat source 51 is not sufficient to properly operate the heat sinks 54, 55 to meet operator demands. For instance, the first heat sink 54 may be a space heater which requires more heat than is provided by the second heat source 51 to heat a living space in the RV 10 to a desired temperature. In this example, the second heat transfer loop 50 is configured to receive heat from the first heat transfer loop 30 via the heat exchanger 90 to thereby provide additional thermal energy to the heat sinks 54, 55. The thermal transfer media in the second heat transfer loop 50 receives heat while passing through the heat exchanger 90 such that relatively higher-temperature thermal transfer media is conveyed away from the heat exchanger 90 to the heat sinks 54, 55. The heat sinks 54, 55 then utilize the provided heat during operation thereof.

Additional example operations of the system 20 are described herein below and with respect to the system 20 depicted in Fig. 2.
a. In one example, the valves 56, 57, 58 are open and the remaining valves 73, 74 are closed and the third heat transfer loop 70 is not active, i.e. 'off.' As such, the first and second heat transfer loops 30, 50 are configured heat both heat sinks 54, 55 and cool both heat sources 31, 51.
b. In another example, the valves 56, 58 are open and the remaining valves 57, 73, 74 are closed and the third heat transfer loop 70 is not active, i.e. 'off.' As such, the first and second heat transfer loops 30, 50 are configured to heat the first heat sink 54 and cool both heat sources 31, 51. The second heat sink 55 is not heated in this example.
c. In another example, the valves 56, 57 are open and the remaining valves 58, 73, 74 are closed and the third heat transfer loop 70 is not active, i.e. 'off.' As such, the first and second heat transfer loops 30, 50 are configured to heat both heat sinks 54, 55 (as the heat exchanger 90 transfers heat from the first heat transfer loop 30 to the second heat transfer loop 50) and cool the first heat source 31. The second heat source 51 is not cooled by the second heat transfer loop 50 in this example.
d. In another example, the valve 56 is open and the remaining valves 57, 58, 73, 74 are closed and the third heat transfer loop 70 is not active, i.e. 'off.' As such, the first and second heat transfer loops 30, 50 are configured to heat the first heat sink 54 (as the heat exchanger 90 transfers heat from the first heat transfer loop 30 to the second heat transfer loop 50) and cool the first heat source 31. The second heat source 51 is not cooled by the second heat transfer loop 50 in this example.
e. In another example, the valves 56, 57, 74 are open and the remaining valves 58, 73 are closed and the third heat transfer loop 70 is active, i.e. 'on.' As such, the third heat transfer loop 70 heats the thermal transfer fluid in the first heat transfer loop 30, which heats the first heat source 31. Although the thermal transfer fluid conveyed from the first heat source 31 is relatively cooler after leaving, it is still hotter than the thermal transfer fluid in the second heat transfer loop 50. Thus, the first heat transfer loop 30 heats the second heat transfer loop 50 via the heat exchanger 90, and the second heat transfer loop 50 heats the heat sinks 54, 55. The second heat source 51 is not cooled by the second heat transfer loop 50 in this example.
f. In another example, the valves 56, 74 are open and the remaining valves 57, 58, 73 are closed and the third heat transfer loop 70 is active, i.e. 'on.' As such, the third heat transfer loop 70 heats the thermal transfer fluid in the first heat transfer loop 30, which heats the first heat source 31. Although the thermal transfer fluid conveyed from the first heat source 31 is relatively cooler after leaving, it is still hotter than the thermal transfer fluid in the second heat transfer loop 50. Thus, the first heat transfer loop 30 heats the second heat transfer loop 50 via the heat exchanger 90, and the second heat transfer loop 50 heats the heat sink 54. The second heat source 51 is not cooled by the second heat transfer loop 50 in this example.
g. In another example, the valve 73 is open and the remaining valves 56, 57, 58, 74 are closed and the third heat transfer loop 70 is active, i.e. `on.' Because the valves 56, 57 to the respective heat sinks 54, 55 are not open, heat cannot be transferred to the heat sinks 54, 55. Instead, the evaporator 75 in the third heat transfer loop 70 cools the thermal transfer media in the first heat transfer loop 30, which cooled fluid then recirculates through the first heat source 31. As such, the first heat transfer loop 30 cools the first heat source 31.
h. In another example, the valve 74 is open and the remaining valves 56, 57, 58, 73 are closed and the third heat transfer loop 70 is active, i.e. 'on.' As such, the condenser 77 of the third heat transfer loop 70 heats the thermal transfer medium in the first heat transfer loop, which heats the first heat source 31.
i. In yet another example, the valves 58, 73 are open and the remaining valves 56, 57, 74 are closed and the third heat transfer loop 70 is active, i.e. 'on.' In such an example, the pump 52 is a reversible pump. The evaporator 75 in the third heat transfer loop 70 cools the thermal transfer media in the first heat transfer loop 30, which cooled thermal transfer fluid is conveyed to the heat exchanger 90. In the heat exchanger 90, thermal energy is transferred from the relatively hotter thermal transfer media in the second heat transfer loop 50 to the relatively cooler thermal transfer media in the first heat transfer loop 30. Although the thermal transfer fluid in the first heat transfer loop 30 is now relatively hotter than it was prior to entering the heat exchanger 90, it may still be cool enough to cool the first heat source 31 when recirculated. Meanwhile, the cooled thermal transfer fluid in the second heat transfer loop 50 leaves the heat exchanger 90 and is pumped through the second heat source 51 in the direction of the arrow REV (again, recall the pump 52 is reversible) thereby cooling the second heat source 51. As such, the first and second heat transfer loops 30, 50 are configured to cool the respective heat sources 31, 51.

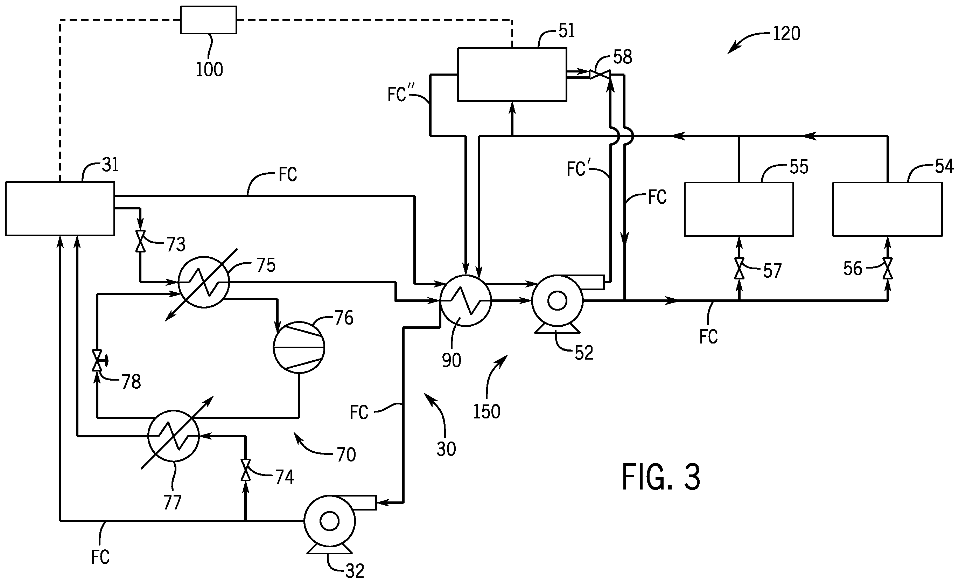

Referring now to Fig. 3, another example thermal management system 120 for an RV (see for example the RV 10 in Fig. 1) is depicted. The system 120 depicted in Fig. 3 is similar to the system 20 described above with respect to Fig. 2 and includes similar features and components, which are labeled with like reference numbers. Thus, the system 20 of Fig. 3 can be operated as described herein above in examples a-h to transfer heat from the first and/or second heat source 31, 51 to the first and/or second heat sinks 54, 55 and/or to heat the first heat source 31.

The system 120 may be advantageously implemented to carry out the example i noted herein above, in which the valves 58, 73 are open and the remaining valves 56, 57, 74 are closed and the third heat transfer loop 70 is active, i.e. 'on.' The pump 52 draws relatively cooler thermal transfer media from the heat exchanger 90 and conveys the thermal transfer media to the second heat source 51 via fluid conduit FC'. The thermal transfer media in the second heat transfer loop 150 is heated by the second heat source 51 and returns to the heat exchanger 90 via conduit FC". The heat exchanger 90 transfers the thermal energy in the thermal transfer media of the second heat transfer loop 150 to the thermal transfer media in the first heat transfer loop 30, which has been cooled by the evaporator 75 of the third heat transfer loop 70.

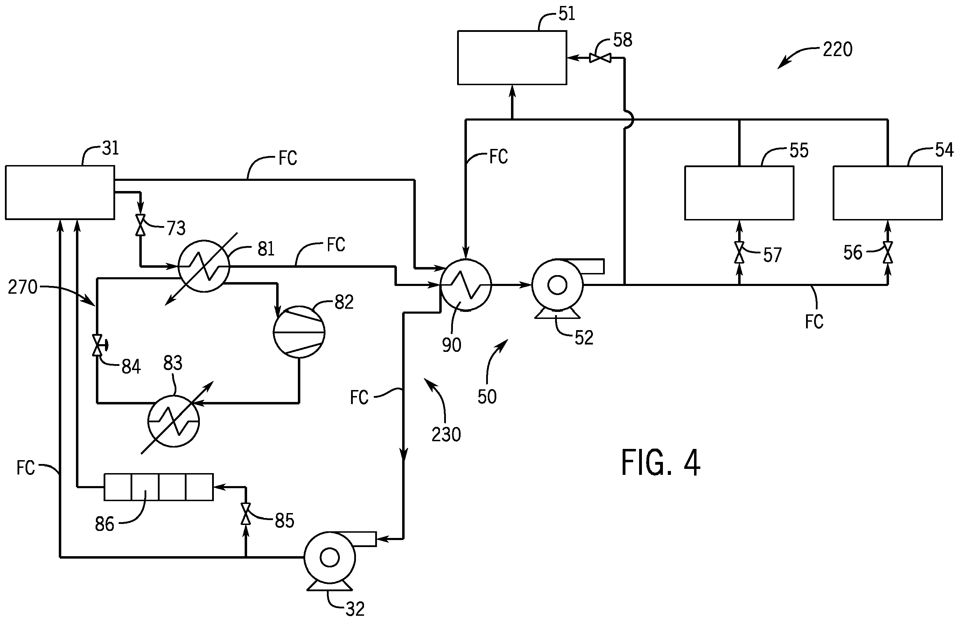

Referring now to Fig. 4, another example thermal management system 220 for an RV (see for example the RV 10 in Fig. 1) is depicted. The system 220 depicted in Fig. 4 is similar to the system 20 described above with respect to Fig. 2 and includes similar features and components, which are labeled with like reference numbers. In this example, the third heat transfer loop 270 is a chiller that includes a heat exchanger 81, a compressor 82, a condenser 83, and an expansion valve 84 operable to cool the thermal transfer media in the first heat transfer loop 30. The above-noted components of the third heat transfer loop 270 can be any suitable component known in the industry.

In one example operation of the first and third heat transfer loops 30, 270, the first valve 73 is opened such that relatively higher temperature thermal transfer media from the first heat source 31 flows through the first valve 73 to the heat exchanger 81. The heat exchanger 81 removes heat from the thermal transfer media in the first heat transfer loop 30 and thereby cools the thermal transfer media. The fluid heated in the heat exchanger 81 is conveyed by a pump (not depicted) of the third heat transfer loop 270 to the condenser 83, which transfers heat out of the thermal transfer media to the environment. As such, the third heat transfer loop 270 is capable of reducing the temperature of the thermal transfer media passing through the first heat transfer loop 30 to the heat exchanger 90. This example operation may be initiated when the temperature of the thermal transfer media passing out of the first heat source 31 is greater than a threshold temperature and the heat sinks 54, 55 do not require heating and therefore cannot serve as a place to transfer thermal energy.

In certain examples, the system 220 can include a valve 85 that can be opened to thereby permit the thermal transfer media within the first heat transfer loop 30 to flow to a heater 86. The heater 86 is configured to heat the thermal transfer media, and the heated media is conveyed to the first heat source 31 to thereby heat the first heat source 31. This example operation may be initiated when the temperature of the first heat source 31 falls to or below a minimum temperature threshold. Such may be the case for a battery, which may require heating when ambient temperatures are cold enough to otherwise damage the battery.

Other methods of operation of the system 220 according to the examples a-i provided hereinabove are possible, wherein the chiller of the third heat transfer loop 270 and the heater 86 take the place of the heat pump of the third heat transfer loop 70 of Fig. 2.

In one example, the first heat transfer loop 30 may use dielectric fluid as the thermal transfer media. Dielectric fluid is capable of being precisely heated and cooled to maintain the temperature of the first heat source 31 (e.g., battery) within a predetermined range. In one example, the second heat transfer loop 50 may use WEG fluid as the thermal transfer media. Because the second heat source 51 (e.g., electric motor) does not require as precise thermal management as a battery, less expensive WEG is sufficient.

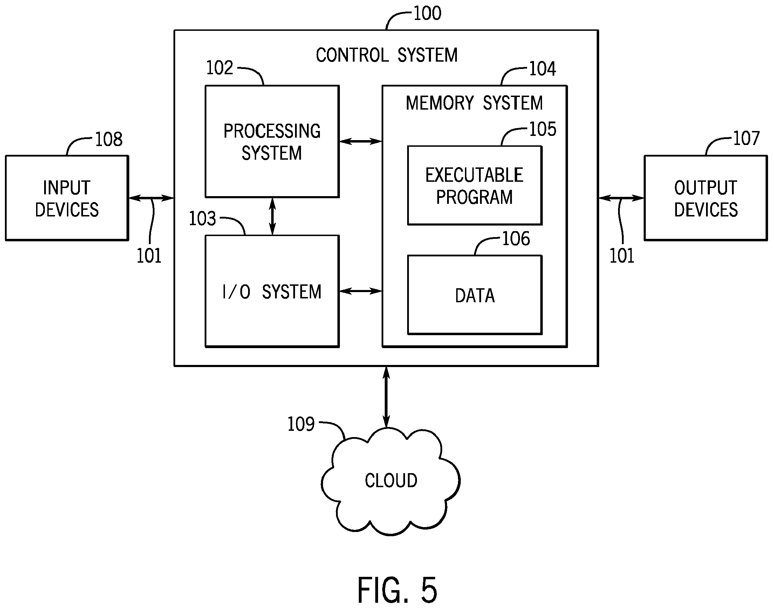

Referring to Fig. 5, the RV 10 can include a control system 100 configured to control components and systems of the RV 10, including the example thermal management systems 20, 120, 220 of the present disclosure.

In certain examples, the control system 100 communicates with each of the one or more components of the system 20, 120, 220 via communication links 101, which can be any wired or wireless link. The control system 100 is capable of receiving information and/or controlling one or more operational characteristics of the system 20, 120, 220 and its various sub-systems by sending and receiving control signals via the communication links 101. In one example, the communication links 101 are part of a controller area network (CAN) bus; however, other types of links could be used. It will be recognized that the extent of connections and the communication links 101 may in fact be one or more shared connections, or links, among some or all of the components in the system 20, 120, 220. Moreover, the communication link 101 lines are meant only to demonstrate that the various control elements are capable of communicating with one another, and do not represent actual wiring connections between the various elements, nor do they represent the only paths of communication between the elements. Additionally, the control system 100 may incorporate various types of communication devices and systems, and thus the illustrated communication links 101 may in fact represent various different types of wireless and/or wired data communication systems.

The control system 100 may be a computing system that includes a processing system 102, memory system 104, and input/output (I/O) system 103 for communicating with other devices, such as input devices 108 (e.g., temperature sensors, heat sink input devices) and output devices 107 (e.g., pump 32, second heat source 51, pump 52, heat sinks 54, 55, valves 56, 57, 58, 73, 74, heater 86, heat exchanger 90). The processing system 102 loads and executes an executable program 105 from the memory system 104, accesses data 106 stored within the memory system 104 (any of which may also or alternatively be stored in a cloud 109), and directs the system 20, 120, 220 to operate as described in further detail hereinabove and below.

The processing system 102 may be implemented as a single microprocessor or other circuitry, or may be distributed across multiple processing devices or sub-systems that cooperate to execute the executable program 105 from the memory system 104. Non-limiting examples of the processing system 102 include general purpose central processing units, application specific processors, and logic devices.

The memory system 104 may comprise any storage media readable by the processing system 102 and capable of storing the executable program 105 and/or data 106. The memory system 104 may be implemented as a single storage device, or may be distributed across multiple storage devices or sub-systems that cooperate to store computer readable instructions, data structures, program modules, or other data. The memory system 104 may include volatile and/or non-volatile memory and may include removable and/or non-removable media implemented in any method or technology for storage of information. The storage media may include non-transitory and/or transitory storage media, including random access memory, read only memory, magnetic discs, optical discs, flash memory, virtual memory, non-virtual memory, magnetic storage devices, or any other medium which can be used to store information and be accessed by an instruction execution system, for example.

In one non-limiting example, the control system 100 controls the operation of the one or more of the heat transfer loops 30, 50, 70 to maintain the temperature of the first heat source 31 above a minimum temperature threshold and below a maximum temperature threshold. The control system 100 further controls the operation of the one or more of the heat transfer loops 30, 50, 70 to maintain the temperature of the second heat source 51 below a maximum temperature threshold. One or more temperature sensors are configured to sense the temperature of the thermal transfer media in the heat transfer loops 30, 50 and/or the temperature of the heat sources 31, 51. The control system 100 receives signals from the temperature sensors corresponding to the sensed temperature and compares the sensed temperature to the temperature threshold(s). If the sensed temperature is below the minimum threshold temperature or above the maximum threshold temperature, the control system 100 sends commands to one or more of the output devices 107 to change the sensed temperature. The control system 100 may use a feedback control algorithm to maintain the temperature of the heat sources 31, 51 and/or heat sinks 54, 55 at a desired temperature. In certain examples, the control system 100 is configured to determine a rate of temperature change and based on the rate of temperature change, the control system 100 controls the output devices 107. In these examples, the rate of temperature change may be used in the feedback control algorithm and/or compared to a lookup table stored on the memory system 104 (e.g., a lookup table comparing rate of temperature change to predetermined actions such as turning 'off' or 'on' a pump).

In still other examples, the control system 100 is configured to determine the charge/discharge rate of the battery (first heat source 31) and to provide anticipatory cooling to the battery based on the charge/discharge rate. In other examples, the control system 100 is configured to determine ambient temperatures and to provide anticipatory heating or cooling to the battery based on ambient temperatures. In other examples, the control system 100 is configured to determine the age of the battery and to provide anticipatory heating or cooling to the battery based on battery age. In still other examples, the control system 100 is configured to determine when the electric motor (second heat source 51) is 'on' and to provide anticipatory cooling to the electric motor. In each of these 'feedforward' examples, a feedback control algorithm could be used to maintain the desired temperature of the heat sources 31, 51 and/or heat sinks 54, 55 thereafter.

In certain examples, a recreational vehicle 10 includes a first heat source 31, a second heat source 51, a first heat sink 54, and a second heat sink 55. At least one heat transfer loop 30, 50 is configured to transfer thermal energy from the first heat source 31 to at least one of the first and second heat sinks 54, 55 and is further configured to transfer thermal energy from the second heat source 51 to at least one of the first and second heat sinks 54, 55.

Optionally, the at least one heat transfer loop includes a first heat transfer loop 30 comprising the first heat source 31 and a second heat transfer loop 50 comprising the second heat source 51 and the first and second heat sinks 54. 55. Optionally, a third heat transfer loop 70 is configured for heat exchange with the first heat transfer loop 30. Optionally, the third heat transfer loop 70 is a heat pump. Optionally, the first heat source 31 comprises a battery. Optionally, a heat exchanger 90 thermally couples the first heat transfer loop 30 and the second heat transfer loop 50. Optionally, the first and second heat sources 31, 51 are selected from the group consisting of a battery, an electric motor, and an inverter. Optionally, the first and second heat sinks 54, 55 are selected from the group consisting of a water heater, a space heater, an oven, a holding tank, a fireplace, and a clothes dryer. Optionally, the at least one heat transfer loop 30, 50 is configured to transfer thermal energy from the first heat source 31 to the at least one of the first and second heat sinks 54, 55 simultaneously while transferring thermal energy from the second heat source 51 to the at least one of the first and second heat sinks 54, 55. Optionally, the at least one heat transfer loop 30, 50 is configured to recirculate cooled heat transfer medium from at least one of the first and second heat sinks 54, 55 to at least one of the first and second heat sources 31, 51.

In certain examples, a method for thermal management of a recreational vehicle includes forming at least one heat transfer loop 30, 50 configured to transfer thermal energy from a first heat source 31 on the recreational vehicle 10 to at least one of a first heat sink 54 on the recreational vehicle 10 and a second heat sink 55 on the recreational vehicle 10 and further configured to transfer thermal energy from a second heat source 51 on the recreational vehicle 10 to at least one of the first heat sink 54 and the second heat sink 55.

Optionally, the method includes forming the at least one heat transfer loop 30, 50 such that the at least one heat transfer loop 30, 50 is configured to recirculate cooled heat transfer medium from at least one of the first heat sink 54 and the second heat sink 55 to at least one of the first heat source 31 and the second heat source 51. Optionally, forming the at least one heat transfer loop includes forming a first heat transfer loop 30 comprising the first heat source 31 and forming a second heat transfer loop 50 comprising the second heat source 51 and the first and second heat sinks 54, 55. Optionally, the method includes forming a third heat transfer loop 70 configured for heat exchange with the first heat transfer loop 30. Optionally, forming the third heat transfer loop 70 comprises providing a heat pump in thermal communication with the first heat transfer loop 30. Optionally, the method includes thermally coupling the first heat transfer loop 30 and the second heat transfer loop 50 by way of a heat exchanger 90.

In certain examples, a thermal management system 20, 120, 220 for a recreational vehicle 10 includes a first heat transfer loop 30, 230 comprising a first heat source 31, a second heat transfer loop 50, 150 comprising a second heat source 51 and a first heat sink 54, and a heat exchanger 90 thermally coupling the first heat transfer loop 30, 230 and the second heat transfer loop 50, 150. The first heat sink 54 is configured to receive thermal energy from both the first and second heat sources 31, 51 via the first and second heat transfer loops 30, 230, 50, 150.

Optionally, a third heat transfer loop 70, 270 is configured for heat exchange with the first heat transfer loop 30, 230. Optionally, the third heat transfer loop 70 is a heat pump. Optionally, the second heat transfer loop 50, 150 further comprises a second heat sink 55 and the second heat sink 55 is configured to receive thermal energy from both the first and second heat sources 31, 51 via the first and second heat transfer loops 30, 230, 50, 150.

In the present description, certain terms have been used for brevity, clarity, and understanding. No unnecessary limitations are to be inferred therefrom beyond the requirement of the prior art because such terms are used for descriptive purposes and are intended to be broadly construed. The different apparatuses, systems, and method steps described herein may be used alone or in combination with other apparatuses, systems, and methods. It is to be expected that various equivalents, alternatives and modifications are possible within the scope of the appended claims.

This written description uses examples to disclose the invention, including the best mode, and also to enable any person skilled in the art to make and use the invention. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

## Claims

1. A recreational vehicle (10) comprising:
a first heat source (31);
a second heat source (51);
a first heat sink (54);
a second heat sink (55); and
at least one heat transfer loop (30, 50) configured to transfer thermal energy from the first heat source (31) to at least one of the first and second heat sinks (54, 55) and configured to transfer thermal energy from the second heat source (51) to at least one of the first and second heat sinks (54, 55).

2. The recreational vehicle of claim 1, wherein the at least one heat transfer loop (30, 50) comprises:
a first heat transfer loop (30) comprising the first heat source (31); and
a second heat transfer loop (50) comprising the second heat source (51) and the first and second heat sinks (54, 55).

3. The recreational vehicle of claim 2, further comprising a third heat transfer loop (70) configured for heat exchange with the first heat transfer loop (30).

4. The recreational vehicle of claim 3, wherein the third heat transfer loop (70) is a heat pump.

5. The recreational vehicle of claims 3 or 4, wherein the first heat source (31) comprises a battery.

6. The recreational vehicle of any of claims 2 to 5, further comprising a heat exchanger (90) that thermally couples the first heat transfer loop (30) and the second heat transfer loop (50).

7. The recreational vehicle of any of claims 1 to 6, wherein the first and second heat sources (31, 51) are selected from the group consisting of: a battery, an electric motor, and an inverter.

8. The recreational vehicle of any of claims 1 to 7, wherein the first and second heat sinks (54, 55) are selected from the group consisting of: a water heater, a space heater, an oven, a holding tank, a fireplace, and a clothes dryer.

9. The recreational vehicle of any of claims 1 to 8, wherein the at least one heat transfer loop (30, 50) is configured to transfer thermal energy from the first heat source (31) to the at least one of the first and second heat sinks (54, 55) simultaneously while transferring thermal energy from the second heat source (51) to the at least one of the first and second heat sinks (54, 55).

10. The recreational vehicle of any of claims 1 to 9, wherein the at least one heat transfer loop (30, 50) is configured to recirculate cooled heat transfer medium from at least one of the first and second heat sinks (54, 55) to at least one of the first and second heat sources (31, 51).

11. A method for thermal management of a recreational vehicle (10), the method comprising forming at least one heat transfer loop (30, 50) configured to transfer thermal energy from a first heat source (31) on the recreational vehicle to at least one of a first heat sink (54) on the recreational vehicle and a second heat sink (55) on the recreational vehicle and configured to transfer thermal energy from a second heat source (51) on the recreational vehicle to at least one of the first heat sink (54) and the second heat sink (55).

12. A thermal management system (20, 120, 220) for a recreational vehicle (10), the thermal management system comprising:
a first heat transfer loop (30) comprising a first heat source (31);
a second heat transfer loop (50) comprising a second heat source (51) and a first heat sink (54); and
a heat exchanger (90) thermally coupling the first heat transfer loop (30) and the second heat transfer loop (50);
wherein the first heat sink (54) is configured to receive thermal energy from both the first and second heat sources (31, 51) via the first and second heat transfer loops (30, 50).

13. The thermal management system of claim 12, further comprising a third heat transfer loop (70) configured for heat exchange with the first heat transfer loop (30).

14. The thermal management system of claim 13, wherein the third heat transfer loop (70) is a heat pump.

15. The thermal management system of claims 12 to 14, wherein the second heat transfer loop (50) further comprises a second heat sink (55) and wherein the second heat sink is configured to receive thermal energy from both the first and second heat sources (31, 51) via the first and second heat transfer loops (30, 50).
